# EUROPEAN PATENT APPLICATION

(11) **EP 2 933 014 A1**
(43) Date of publication of application: **21.10.2015**
(21) Application number: 13857209.4
(22) Date of filing: 09.08.2013
(51) Int. Cl.: B01D 71/70, B01D 69/10, B01D 69/12, B01D 71/02, B01J 20/02, B01J 20/04

(54) **SEPARATION MEMBRANE FOR TREATMENT OF GASES CONTAINING ACIDIC GAS, METHOD FOR PRODUCING SAME, METHOD FOR SEPARATING ACIDIC GAS OR METHANE GAS, AND METHOD FOR PRODUCING ACIDIC GAS OR METHANE GAS**

(30) Priority: 21.11.2012 JP 2012255002
(71) Applicant: Toyo Tire & Rubber Co., Ltd., Osaka-shi, Osaka 550-8661 (JP)
(72) Inventor: KURAHASHI, Tomohiko, Osaka-shi Osaka 550-8661 (JP); KURAOKA, Koji, Kobe-shi Hyogo 657-8501 (JP)
(74) Representative: Hart-Davis, Jason
(86) International application number: PCT/JP2013/071719
(87) International publication number: WO 2014/080670

(57) **Abstract**

An acidic gas-containing gas treatment separation membrane is provided which is capable of separating acidic gas or methane gas from biogas containing acidic gas, such as carbon dioxide or the like, and methane gas to obtain a gas having a high methane concentration. The acidic gas-containing gas treatment separation membrane includes a polysiloxane network structure having an introduced hydrocarbon group, doped with a metal salt having affinity for acidic gas. The polysiloxane network structure having the introduced hydrocarbon group is a composite polysiloxane network structure obtained by a reaction of a tetraalkoxysilane with a trialkoxysilane containing the hydrocarbon group. The tetraalkoxysilane is tetramethoxysilane or tetraethoxysilane. The trialkoxysilane containing the hydrocarbon group is trimethoxysilane or triethoxysilane whose Si atom is bonded with an alkyl or phenyl group having 1-6 carbon atoms.

## Description

### TECHNICAL FIELD

The present invention relates to techniques of effectively utilizing biogas containing acidic gas and methane gas which are, for example, obtained by biologically treating garbage or the like. More particularly, the present invention relates to an acidic gas-containing gas treatment separation membrane for separating acidic gas or methane gas contained in biogas, and a method for producing the acidic gas-containing gas treatment separation membrane. The present invention also relates to a method for separating acidic gas or methane gas using the acidic gas-containing gas treatment separation membrane, and a method for producing acidic gas or methane gas using the acidic gas-containing gas treatment separation membrane.

### BACKGROUND ART

The biological treatment of garbage or the like is accompanied by production of biogas which is a mixture of acidic gas (carbon dioxide, hydrogen sulfide, etc.) and combustible gas (methane gas, etc.). This biogas can be directly combusted, and therefore, can, for example, be used as fuel in thermal power generation or the like. Recently, in order to effectively utilize energy, methane gas, which is a combustible component, is extracted from the biogas, and is used as a material for town gas or a source of hydrogen used in a fuel cell.

In the background art, among the techniques of separating methane gas from a gas mixture, such as biogas or the like, is a methane concentration device which includes two separation membrane stages, and applies the gas mixture to the separation membrane stages serially to remove gases other than methane gas from the gas mixture in a stepwise fashion to concentrate methane gas (see, for example, Patent Document 1). The methane concentration device of Patent Document 1 separates a gas A having a smaller molecular size than that of methane gas from a gas mixture. As the separation membrane, an inorganic porous membrane is employed which has a permeability coefficient ratio "A/methane" of the gas A to methane of 5 or more and a permeability of 1 × 10⁻⁹ or more (mol·m⁻²·s⁻¹·Pa⁻¹) with respect to the gas A. The use of such a separation membrane allows for extraction of a gas having a high methane concentration at a high recovery rate.

A gas having a high methane concentration may be obtained from a gas mixture as follows. If carbon dioxide is separated from the gas mixture, the concentration of methane gas in the gas mixture relatively increases, so that a gas having a high methane concentration is obtained. Carbon dioxide may be separated from a gas mixture using a gas separation filter which includes a separation membrane formed from an amorphous oxide having a plurality of pores formed by a cyclic siloxane linkage, where a basic functional group containing nitrogen (N) and silicon (Si) is bonded to a side chain of Si (see, for example, Patent Document 2). The gas separation filter of Patent Document 2 allows acidic gas, such as carbon dioxide or the like, to efficiently pass through the narrow pores, and therefore, has high separation performance.

### CITATION LIST

### PATENT LITERATURE

Patent Document 1: Japanese Unexamined Patent Application Publication No. 2008-260739
Patent Document 2: Japanese Unexamined Patent Application Publication No. 2000-279773

### SUMMARY OF INVENTION

### TECHNICAL PROBLEM

In order to concentrate methane gas in a gas mixture using a separation membrane, the separation membrane needs to be capable of efficiently passing carbon dioxide contained in the gas mixture. In this regard, the methane concentration device of Patent Document 1 employs a separation membrane which separates a gas A having a smaller molecular size than that of methane gas, and the gas A includes carbon dioxide. Patent Document 1 describes an example separation membrane which has a permeability coefficient ratio "CO₂/CH₄" of carbon dioxide to methane of 3.3-20. However, such a low permeability coefficient ratio causes a large loss of methane gas. Therefore, as in Patent Document 1, it is necessary to provide two separation membrane stages and additionally a complicated device configuration which recirculates a gas which has previously failed to pass, for example. Otherwise, it would be difficult to sufficiently concentrate methane gas to a practical level.

In the case of the gas separation filter of Patent Document 2, an attempt is made to increase carbon dioxide separation performance by introducing a basic functional group containing nitrogen (N) and silicon (Si) into a surface of a separation membrane. In order to provide sufficient carbon dioxide separation performance, it is important to form a uniform membrane while introducing a sufficient number of functional groups into a surface of the separation membrane. However, in the separation membrane of Patent Document 2, the number of functional groups which can be introduced is determined based on the molecular structure (the number of reaction sites) of a material for the separation membrane. Therefore, there is a limit for improving carbon dioxide separation performance only by modifying the separation membrane itself. Also, as the number of functional groups introduced into the separation membrane increases, steric hindrance more easily occurs in the molecular structure, which is likely to adversely influence the formation of a uniform membrane.

With the above problems in mind, the present invention has been made. It is an object of the present invention to provide an acidic gas-containing gas treatment separation membrane capable of separating acidic gas or methane gas from biogas containing acidic gas such as carbon dioxide or the like and methane gas to provide a gas having a high methane concentration, and a method for producing the acidic gas-containing gas treatment separation membrane. It is another object of the present invention to provide a method for separating acidic gas or methane gas using the acidic gas-containing gas treatment separation membrane, and a method for producing acidic gas or methane gas using the acidic gas-containing gas treatment separation membrane.

### SOLUTION TO PROBLEM

To achieve the object, a separation membrane for treating gas containing acidic gas, according to the present invention, includes a polysiloxane network structure having an introduced hydrocarbon group, doped with a metal salt having affinity for the acidic gas.

According to the acidic gas-containing gas treatment separation membrane thus configured, the hydrocarbon group possessed by the polysiloxane network structure inherently has affinity for carbon dioxide or methane gas, and therefore, if the polysiloxane network structure is doped with a metal salt having affinity for acidic gas (containing carbon dioxide), the affinity of the separation membrane for carbon dioxide can be synergistically improved. Therefore, when biogas containing acidic gas, such as carbon dioxide or the like, and methane gas is applied to the acidic gas-containing gas treatment separation membrane thus configured, carbon dioxide in the biogas is selectively attracted by the surface of the polysiloxane network structure, and is directly passed through the separation membrane. As a result, the methane gas component of the biogas is concentrated, whereby a gas having a high methane concentration can be efficiently obtained.

In the acidic gas-containing gas treatment separation membrane of the present invention, the polysiloxane network structure having the introduced hydrocarbon group is preferably a composite polysiloxane network structure obtained by a reaction of a tetraalkoxysilane with a trialkoxysilane containing the hydrocarbon group.

According to the acidic gas-containing gas treatment separation membrane thus configured, a tetraalkoxysilane and a hydrocarbon group-containing trialkoxysilane are used as materials, which are caused to be react with each other to form a composite polysiloxane network structure. The composite polysiloxane network structure has properties which are a combination of stable structure derived from the tetraalkoxysilane and high carbon dioxide affinity derived from the hydrocarbon group-containing trialkoxysilane. Therefore, by applying the composite polysiloxane network structure to the acidic gas-containing gas treatment separation membrane, the methane gas component of biogas can be efficiently concentrated.

In the acidic gas-containing gas treatment separation membrane of the present invention, the tetraalkoxysilane is preferably tetramethoxysilane or tetraethoxysilane (indicated by "A"). The trialkoxysilane containing the hydrocarbon group is preferably a trimethoxysilane or triethoxysilane whose Si atom is bonded with an alkyl or phenyl group having 1-6 carbon atoms (indicated by "B").

According to the acidic gas-containing gas treatment separation membrane thus configured, the above preferable combination of the tetraalkoxysilane (A) and the hydrocarbon group-containing trialkoxysilane (B) is selected. Therefore, a composite polysiloxane network structure which has both stable structure and high carbon dioxide affinity can be efficiently obtained. The acidic gas-containing gas treatment separation membrane having the composite polysiloxane network structure has good carbon dioxide or methane gas separation performance.

In the acidic gas-containing gas treatment separation membrane of the present invention, the mixing ratio (A/B) of the A to the B, expressed in a mole ratio, is preferably 1/9-9/1.

According to the acidic gas-containing gas treatment separation membrane thus configured, the mixing ratio of the tetraalkoxysilane (A) to the hydrocarbon group-containing trialkoxysilane (B), expressed in a mixing ratio, is suitably set to 1/9-9/1. Therefore, the acidic gas-containing gas treatment separation membrane can efficiently separate acidic gas or methane gas.

In the acidic gas-containing gas treatment separation membrane of the present invention, the metal salt is preferably an acetate, nitrate, carbonate, borate, or phosphate of at least one metal selected from the group consisting of Li, Na, K, Mg, Ca, Ni, Fe, and Al.

According to the acidic gas-containing gas treatment separation membrane thus configured, the above preferable metal salt is selected as the metal salt having affinity for acidic gas (containing carbon dioxide). Therefore, when biogas is applied to the separation membrane, carbon dioxide in the biogas is reliably attracted by the surface of the polysiloxane network structure, and is selectively passed through the separation membrane. As a result, the methane gas component of the biogas is concentrated, whereby a gas having a high methane concentration can be obtained.

To achieve the object, a method for producing a separation membrane for treating a gas containing acidic gas, according to the present invention, includes (a) a preparation step of formulating a first preparation solution which is a mixture of an acid catalyst, water, and an organic solvent, and a second preparation solution which is a mixture of an acid catalyst, an organic solvent, and a metal salt having affinity for the acidic gas, (b) a first mixing step of mixing the first preparation solution with a tetraalkoxysilane, (c) a second mixing step of mixing a mixture solution obtained in the first mixing step with a trialkoxysilane containing a hydrocarbon group, (d) a third mixing step of mixing a mixture solution obtained in the second mixing step with the second preparation solution, (e) an application step of applying a mixture solution obtained in the third mixing step to an inorganic porous support member, and (f) a formation step of performing a thermal treatment on the inorganic porous support member after the application step, to form a polysiloxane network structure having the introduced hydrocarbon group, doped with the metal salt, on a surface of the inorganic porous support member.

According to the acidic gas-containing gas treatment separation membrane production method thus configured, the hydrocarbon group derived from the hydrocarbon group-containing trialkoxysilane and the metal salt having affinity for acidic gas are used, whereby the affinity of the separation membrane for carbon dioxide can be synergistically improved. Also, two separate material solutions, i.e., the first preparation solution which is a mixture of an acid catalyst, water, and an organic solvent and the second preparation solution which is a mixture of an acid catalyst, an organic solvent, and a metal salt having affinity for acidic gas, are formulated. The two preparation solutions are then caused to react with each other. Therefore, rapid hydrolysis of the alkoxysilane solution and a significant change in the pH of the alkoxysilane solution during mixing of the metal salt are reduced or prevented. As a result, a uniform and dense acidic gas-containing gas treatment separation membrane having good carbon dioxide or methane gas separation performance can be formed.

To achieve the object, a method for producing a separation membrane for treating a gas containing acidic gas, according to the present invention, includes (a) a preparation step of formulating a first preparation solution which is a mixture of an acid catalyst, water, and an organic solvent, and a second preparation solution which is a mixture of an acid catalyst, an organic solvent, and a metal salt having affinity for the acidic gas, (b) a first mixing step of mixing the first preparation solution with the second preparation solution, (c) a second mixing step of mixing a mixture solution obtained in the first mixing step with a tetraalkoxysilane, (d) a third mixing step of mixing a mixture solution obtained in the second mixing step with a trialkoxysilane containing a hydrocarbon group, (e) an application step of applying a mixture solution obtained in the third mixing step to an inorganic porous support member, and (f) a formation step of performing a thermal treatment on the inorganic porous support member after the application step, to form a polysiloxane network structure having the introduced hydrocarbon group, doped with the metal salt, on a surface of the inorganic porous support member.

According to the acidic gas-containing gas treatment separation membrane production method thus configured, even when the first preparation solution and the second preparation solution are initially mixed together, the affinity of the separation membrane for carbon dioxide is synergistically improved as with that described above. Moreover, a uniform and dense acidic gas-containing gas treatment separation membrane having good carbon dioxide or methane gas separation performance can be formed.

To achieve the object, a method for producing a separation membrane for treating a gas containing acidic gas, according to the present invention, includes (a) a preparation step of formulating a preparation solution which is a mixture of an acid catalyst, water, and an organic solvent, (b) a first mixing step of mixing the preparation solution obtained in the preparation step with a tetraalkoxysilane, (c) a second mixing step of mixing a mixture solution obtained in the first mixing step with a trialkoxysilane containing a hydrocarbon group, (d) a third mixing step of mixing a mixture solution obtained in the second mixing step with a metal salt having affinity for the acidic gas, (e) an application step of applying a mixture solution obtained in the third mixing step to an inorganic porous support member, and (f) a formation step of performing a thermal treatment on the inorganic porous support member after the application step, to form a polysiloxane network structure having the introduced hydrocarbon group, doped with the metal salt, on a surface of the inorganic porous support member.

According to the acidic gas-containing gas treatment separation membrane production method thus configured, the mixture solution obtained in the second mixing step is mixed with a metal salt having affinity for acidic gas. Therefore, the affinity of the separation membrane for carbon dioxide is synergistically improved by a synergistic effect of the metal salt and the hydrocarbon group derived from the hydrocarbon group-containing trialkoxysilane. Moreover, a uniform and dense acidic gas-containing gas treatment separation membrane having good carbon dioxide or methane gas separation performance can be formed.

In the acidic gas-containing gas treatment separation membrane production method of the present invention, the tetraalkoxysilane is preferably tetramethoxysilane or tetraethoxysilane (indicated by "A"), and the hydrocarbon group-containing trialkoxysilane is preferably a trimethoxysilane or triethoxysilane whose Si atom is bonded with an alkyl or phenyl group having 1-6 carbon atoms (indicated by "B").

According to the acidic gas-containing gas treatment separation membrane production method thus configured, the above preferable combination of the tetraalkoxysilane (A) and the hydrocarbon group-containing trialkoxysilane (B) is selected. Therefore, a composite polysiloxane network structure which has both stable structure and high carbon dioxide affinity can be efficiently obtained. The acidic gas-containing gas treatment separation membrane having the composite polysiloxane network structure has good carbon dioxide or methane gas separation performance.

In the acidic gas-containing gas treatment separation membrane production method of the present invention, the mixing ratio (A/B) of the A to the B, expressed in a mole ratio, is preferably 1/9-9/1.

According to the acidic gas-containing gas treatment separation membrane production method thus configured, the mixing ratio of the tetraalkoxysilane (A) to the hydrocarbon group-containing trialkoxysilane (B), expressed in a mixing ratio, is suitably set to 1/9-9/1. Therefore, the acidic gas-containing gas treatment separation membrane can efficiently separate acidic gas or methane gas.

In the acidic gas-containing gas treatment separation membrane production method of the present invention, the metal salt is preferably an acetate, nitrate, carbonate, borate, or phosphate of at least one metal selected from the group consisting of Li, Na, K, Mg, Ca, Ni, Fe, and Al.

According to the acidic gas-containing gas treatment separation membrane production method thus configured, the above preferable metal salt is selected as the metal salt having affinity for acidic gas (containing carbon dioxide). Therefore, the acidic gas-containing gas treatment separation membrane has good carbon dioxide or methane gas separation performance.

To achieve the object, a method for separating acidic gas or methane gas according to the present invention includes applying biogas containing the acidic gas and the methane gas to the above acidic gas-containing gas treatment separation membrane.

According to the acidic gas or methane gas separation method thus configured, acidic gas or methane gas can be efficiently separated by applying biogas containing acidic gas and methane gas to the uniform and dense acidic gas-containing gas treatment separation membrane having good carbon dioxide or methane gas separation performance.

To achieve the object, a method for producing acidic gas or methane gas according to the present invention includes applying biogas containing the acidic gas and the methane gas to the above acidic gas-containing gas treatment separation membrane to extract the acidic gas or the methane gas.

According to the acidic gas or methane gas production method thus configured, acidic gas or methane gas can be efficiently extracted by applying biogas containing acidic gas and methane gas to the uniform and dense acidic gas-containing gas treatment separation membrane having good carbon dioxide or methane gas separation performance.

### DESCRIPTION OF EMBODIMENTS

Embodiments of an acidic gas-containing gas treatment separation membrane and a method for producing the same, a method for separating acidic gas or methane gas, and a method for producing acidic gas or methane gas, according to the present invention, will now be described. Note that the present invention is not intended to be limited to configurations described below.

### <Acidic Gas-containing Gas Treatment Separation Membrane>

The acidic gas-containing gas treatment separation membrane of the present invention is provided for treating biogas which is, for example, obtained by biologically treating garbage or the like. The biogas contains a gas mixture of acidic gas (containing carbon dioxide as a main component, and other components, such as hydrogen sulfide and the like) and methane gas. As used herein, the biogas refers to a gas mixture of carbon dioxide and methane gas. Therefore, in the description that follows, for the sake of convenience, the acidic gas is assumed to be carbon dioxide as an example, and the acidic gas-containing gas treatment separation membrane is assumed to be a carbon dioxide separation membrane which selectively attracts carbon dioxide. Note that the acidic gas-containing gas treatment separation membrane of the present invention may be configured as a methane gas separation membrane which selectively attracts methane gas, or alternatively, as a carbon dioxide/methane gas separation membrane which can simultaneously separate carbon dioxide and methane gas. The acidic gas-containing gas treatment separation membrane may also be hereinafter simply referred to a "separation membrane."

The acidic gas-containing gas treatment separation membrane is configured by doping a polysiloxane network structure having an introduced hydrocarbon group, with a metal salt which has affinity for acidic gas. The polysiloxane network structure having an introduced hydrocarbon group (also referred to as a "hydrocarbon group-introduced polysiloxane network structure") is obtained by reaction of a tetraalkoxysilane with a trialkoxysilane containing a hydrocarbon group (hereinafter referred to as a "hydrocarbon group-containing trialkoxysilane").

The tetraalkoxysilane is a tetrafunctional alkoxysilane represented by the following formula (1). 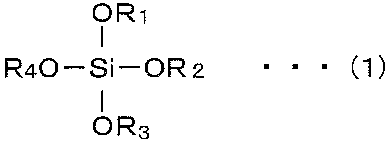 where R₁ to R₄ represent the same or different alkyl groups having 1 or 2 carbon atoms.

A preferable tetraalkoxysilane is tetramethoxysilane (TMOS), in which all R₁ to R₄ are a methyl group in Formula (1), or tetraethoxysilane (TEOS), in which all R₁ to R₄ are an ethyl group in Formula (1).

The hydrocarbon group-containing trialkoxysilane is a trifunctional alkoxysilane represented by the following formula (2). 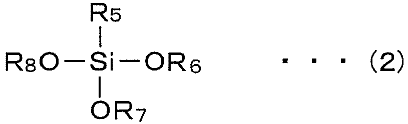 where R₅ represents an alkyl or phenyl group having 1-6 carbon atoms, and R₆ to R₈ represent the same or different alkyl groups having 1 or 2 carbon atoms.

A preferable hydrocarbon group-containing trialkoxysilane is trimethoxysilane, in which all R₆ to R₈ are a methyl group in Formula (2), or triethoxysilane in which all R₆ to R₈ are an ethyl group, whose Si atom is bonded with an alkyl or phenyl group having 1-6 carbon atoms. Examples of the preferable hydrocarbon group-containing trialkoxysilane include methyltrimethoxysilane, methyltriethoxysilane, ethyltrimethoxysilane, ethyltriethoxysilane, propyltrimethoxysilane, propyltriethoxysilane, butyltrimethoxysilane, butyltriethoxysilane, pentyltrimethoxysilane, pentyltriethoxysilane, hexyltrimethoxysilane, hexyltriethoxysilane, phenyltrimethoxysilane, and phenyltriethoxysilane.

If a tetrafunctional alkoxysilane of Formula (1) and a trifunctional alkoxysilane of Formula (2) are caused to react with each other, a composite polysiloxane network structure represented by the following formula (3) is obtained, for example. 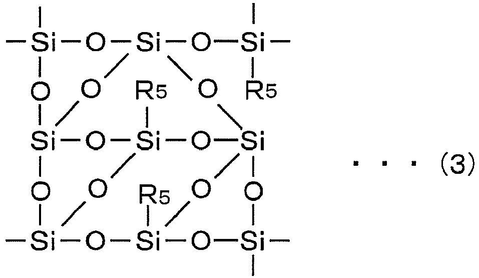 where R₅ represents an alkyl or phenyl group having 1-6 carbon atoms.

In the composite polysiloxane network structure of Formula (3), the hydrocarbon group R₅ exists in the polysiloxane network structure, which forms a kind of organic-inorganic composite material.

Here, the present inventors have studied characteristics of the trifunctional alkoxysilane of Formula (2) to discover that methyltrimethoxysilane or methyltriethoxysilane (a hydrocarbon group having one carbon atom) mainly has affinity for carbon dioxide, and trimethoxysilane or triethoxysilane whose Si atom is bonded with an alkyl or phenyl group having 2-6 carbon atoms (hydrocarbon groups having 2-6 carbon atoms) mainly has affinity for methane gas. In addition, when the tetrafunctional alkoxysilane of Formula (1) and the trifunctional alkoxysilane of Formula (2) are caused to react with each other to synthesize the composite polysiloxane network structure of Formula (3), it is important to optimize the mixing ratio of the tetrafunctional alkoxysilane (indicated by "A") to the trifunctional alkoxysilane (indicated by "B") in order to form a separation membrane having good carbon dioxide separation performance or methane gas separation performance. The optimum mixing ratio A/B found by the present inventors, which is expressed in a mole ratio, is 1/9-9/1, preferably 3/7-7/3, and more preferably 4/6-6/4. With such a mixing ratio, a composite polysiloxane network structure which has both stable structure and high carbon dioxide affinity can be efficiently obtained.

In order to increase selectivity with respect to carbon dioxide or methane gas, it is effective to adjust the composition of the trifunctional alkoxysilane (B) of Formula (2), which is one of the materials. For example, the amount of methyltrimethoxysilane or methyltriethoxysilane contained in the trifunctional alkoxysilane may be increased in order to increase the selectivity (affinity) with respect to carbon dioxide. The amount of trimethoxysilane or triethoxysilane whose Si atom is bonded with an alkyl or phenyl group having 2-6 carbon atoms, that is contained in the trifunctional alkoxysilane, may be increased in order to increase the selectivity (affinity) with respect to methane gas. Specifically, while the mixing ratio (A/B) of the tetrafunctional alkoxysilane (A) to the trifunctional alkoxysilane (B) is set to fall within the above suitable range, the mixing ratio (B1/B2) of methyltrimethoxysilane or methyltriethoxysilane (indicated by "B1") to trimethoxysilane or triethoxysilane whose Si atom is bonded with an alkyl or phenyl group having 2-6 carbon atoms (indicated by "B2"), of the trifunctional alkoxysilane (B), is optimized. The suitable mixing ratio B1/B2 in the trifunctional alkoxysilane (B) found by the present inventors, which is expressed in a mole ratio, is 1/9-9/1, preferably 3/7-7/3, and more preferably 4/6-6/4.

The composite polysiloxane network structure of Formula (3) is doped with a metal salt having affinity for carbon dioxide. The metal salt is, for example, an acetate, nitrate, carbonate, borate, or phosphate of at least one metal selected from the group consisting of Li, Na, K, Mg, Ca, Ni, Fe, and Al. Of them, magnesium acetate or magnesium nitrate is preferable. The metal salts including magnesium acetate and the like have good affinity for carbon dioxide, and therefore, can highly efficiently separate carbon dioxide due to a synergistic effect with the hydrocarbon group R₅ (particularly, when R₅ is a methyl group) included in the polysiloxane network structure. The metal salt is doped by, for example, immersing the composite polysiloxane network structure in an aqueous solution containing the metal salt and thereby impregnating the composite polysiloxane network structure with the metal salt alone or together with other substances.

### <Method for Producing Acidic Gas-containing Gas Treatment Separation Membrane>

The acidic gas-containing gas treatment separation membrane of the present invention is produced by performing the following steps (a)-(f). The steps will now be described in detail.

### (a) Preparation Step

A preparation step includes formulating a first preparation solution which is a mixture of an acid catalyst, water, and an organic solvent. The first preparation solution is used in a "first mixing step" following the preparation step. The amounts of the acid catalyst, water, and organic solvent in the mixture are preferably adjusted to 0.005-0.1 mol, 0.5-10 mol, and 5-60 mol, respectively, with respect to a total of 1 mol of a tetraalkoxysilane and a hydrocarbon group-containing trialkoxysilane described below. If the amount of the acid catalyst in the mixture is less than 0.005 mol, the hydrolysis rate is low, and therefore, it takes a long time to produce a separation membrane. If the amount of the acid catalyst in the mixture is more than 0.1 mol, the hydrolysis rate is excessively high, and therefore, it is difficult to obtain a uniform separation membrane. If the amount of water in the mixture is less than 0.5 mol, the hydrolysis rate is low, and therefore, a sol-gel reaction described below does not sufficiently proceed. If the amount of water in the mixture is more than 10 mol, the hydrolysis rate is excessively high, and therefore, the pore diameter increases, so that it is difficult to obtain a dense separation membrane. If the amount of the organic solvent in the mixture is less than 5 mol, the concentration of a mixture solution containing a tetraalkoxysilane and a hydrocarbon group-containing trialkoxysilane described below is high, and therefore, it is difficult to obtain a dense and uniform separation membrane. If the amount of the organic solvent in the mixture is more than 60 mol, the concentration of a mixture solution containing a tetraalkoxysilane and a hydrocarbon group-containing trialkoxysilane described below is low, and therefore, the number of times of coating with the mixture solution (the number of steps) increases, resulting in a reduction in production efficiency. Examples of the acid catalyst used include nitric acid, hydrochloric acid, sulfuric acid, and the like. Of them, nitric acid or hydrochloric acid is preferable. Examples of the organic solvent used include methanol, ethanol, propanol, butanol, benzene, toluene, and the like. Of them, methanol or ethanol is preferable.

The preparation step also includes formulating a second preparation solution which is a mixture of an acid catalyst, an organic solvent, and a metal salt having affinity for carbon dioxide. The second preparation solution is used in a "third mixing step" described below. The amounts of the acid catalyst, organic solvent, and metal salt in the mixture are preferably adjusted to 0.001-0.1 mol, 0.1-10 mol, and 0.01-0.3 mol, respectively, with respect to a total of 1 mol of a tetraalkoxysilane and a hydrocarbon group-containing trialkoxysilane described below. If the amount of the acid catalyst in the mixture is less than 0.001 mol, the hydrolysis rate is low, and therefore, it takes a long time to produce a separation membrane. If the amount of the acid catalyst in the mixture is more than 0.1 mol, the hydrolysis rate is excessively high, and therefore, it is difficult to obtain a uniform separation membrane. If the amount of the organic solvent in the mixture is less than 0.1 mol, the concentration of a mixture solution containing a tetraalkoxysilane and a hydrocarbon group-containing trialkoxysilane described below is high, and therefore, it is difficult to obtain a dense and uniform separation membrane. If the amount of the organic solvent in the mixture is more than 10 mol, the concentration of a mixture solution containing a tetraalkoxysilane and a hydrocarbon group-containing trialkoxysilane described below is low, the number of times of coating with the mixture solution (the number of steps) increases, resulting in a reduction in production efficiency. If the amount of the metal salt in the mixture is less than 0.01 mol, attraction force for carbon dioxide is not sufficient, and therefore, it is difficult to efficiently separate carbon dioxide or methane gas. If the amount of the metal salt in the mixture is more than 0.3 mol, a pore of a separation membrane is likely to be blocked by the metal salt. The acid catalyst and the organic solvent used may be similar to those of the first preparation solution. As the metal salt having affinity for carbon dioxide, those described above in the section "Acidic Gas-containing Gas Treatment Separation Membrane" may be used.

### (b) First Mixing Step

A first mixing step includes mixing the first preparation solution formulated in the preparation step with a tetraalkoxysilane is performed. At this time, in the mixture solution, a sol-gel reaction begins in which the tetraalkoxysilane repeatedly undergoes hydrolysis and polycondensation. The tetraalkoxysilane used may be those described above in the section "Acidic Gas-containing Gas Treatment Separation Membrane." For example, if tetraethoxysilane (TEOS) is used as an example of the tetraalkoxysilane, the sol-gel reaction may proceed according to the following scheme (Scheme 1). Note that Scheme 1 is a model of the process of the sol-gel reaction, and may not necessarily completely correspond to the actual molecular structure.

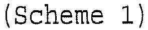

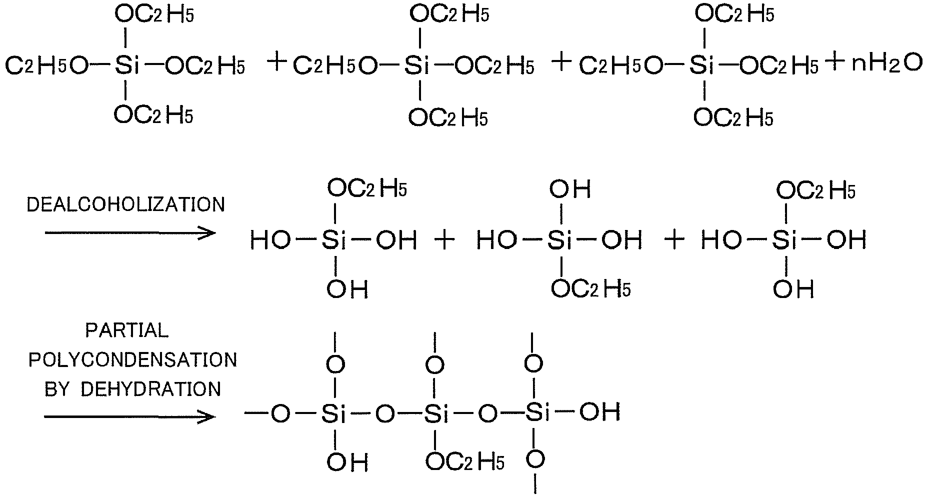

According to Scheme 1, a portion of the ethoxy groups of tetraethoxysilane is initially hydrolyzed and dealcoholized to produce a silanol group. A portion of the ethoxy groups of tetraethoxysilane may not be hydrolyzed, and may remain unchanged. Next, a portion of the silanol groups is associated with neighboring silanol groups to undergo polycondensation due to dehydration. As a result, a siloxane backbone with remaining silanol or ethoxy groups is formed. The above hydrolysis reaction and dehydration polycondensation reaction substantially uniformly proceed in the mixture solution system, and therefore, silanol or ethoxy groups are substantially uniformly distributed in the siloxane backbone. In this stage, the molecular weight of the siloxane is not significantly large, i.e., the siloxane is an oligomer rather than a polymer. Therefore, the silanol group-containing or ethoxy group-containing siloxane oligomer is dissolved in the mixture solution containing an organic solvent.

### (c) Second Mixing Step/(d) Third Mixing Step

A second mixing step includes mixing the mixture solution containing the siloxane oligomer obtained in the first mixing step with a hydrocarbon group-containing trialkoxysilane. As a result, a reaction of the siloxane oligomer with the hydrocarbon group-containing trialkoxysilane begins. Moreover, a third mixing step includes mixing the mixture solution obtained in the second mixing step with the second preparation solution. The third mixing step is preferably performed within 30 min after the second mixing step. In the present invention, the first preparation solution which is a mixture of an acid catalyst, water, and an organic solvent, and the second preparation solution which is a mixture of an acid catalyst, an organic solvent, and a metal salt having affinity for carbon dioxide, are separately formulated as material solutions, and then caused to react with each other. Therefore, the hydrolysis of the hydrocarbon group-containing trialkoxysilane does not rapidly proceed in the second mixing step, and the pH of the mixture solution does not significantly fluctuate in the third mixing step, and therefore, the sol-gel reaction is allowed to stably proceed. Incidentally, in the case of a background-art technique of mixing the material solutions together all at once, the pH of the mixture solution may significantly increase from about 0.8 to about 4-6 under some conditions. In this case, the sol-gel reaction is not stable, and the acidic gas-containing gas treatment separation membrane finally obtained is not likely to have a uniform and dense structure.

In the third mixing step, the metal salt having affinity for carbon dioxide is taken in by the produced polysiloxane. The hydrocarbon group-containing trialkoxysilane used may be those described in the above section "Acidic Gas-containing Gas Treatment Separation Membrane." For example, when methyltriethoxysilane is used as an example of the hydrocarbon group-containing trialkoxysilane, the reaction may proceed according to the following scheme (Scheme 2). Note that Scheme 2 is a model of the process of the reaction, and may not necessarily completely correspond to the actual molecular structure.

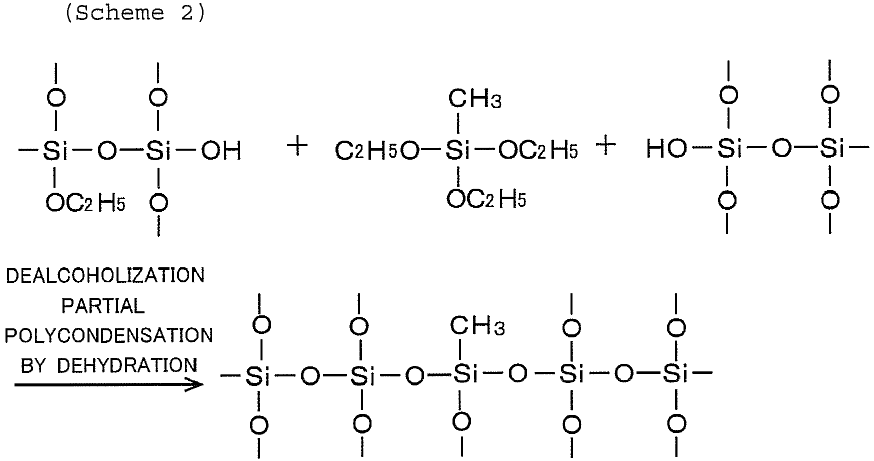

According to Scheme 2, a silanol or ethoxy group of a siloxane oligomer, and an ethoxy group of methyltriethoxysilane, react with each other to undergo dealcoholization, resulting in a polysiloxane linkage. Here, silanol or ethoxy groups of siloxane oligomers are substantially uniformly distributed in the siloxane backbone as described above. Therefore, the reaction (dealcoholization) of a silanol or ethoxy group of a siloxane oligomer with an ethoxy group of methyltriethoxysilane, that proceeds in the second and third mixing steps, may substantially uniformly proceed. As a result, a siloxane bond derived from methyltriethoxysilane is substantially uniformly generated in the generated polysiloxane linkage, and therefore, an ethyl group derived from methyltriethoxysilane is also substantially uniformly present in the polysiloxane linkage. The metal salt taken in by the polysiloxane during the sol-gel reaction may also be substantially uniformly distributed in the polysiloxane linkage. In this stage, the polysiloxane has a fairly large molecular weight, and the mixture solution after the third mixing step is a colloid or suspension in which fine polysiloxane particles are dispersed.

### (e) Application Step

An application step includes applying the mixture solution (a colloid or suspension of fine polysiloxane particles) obtained in the third mixing step to an inorganic porous support member. Examples of a material for the inorganic porous support member include silica-based ceramics, silica-based glass, alumina-based ceramics, stainless steel, titanium, silver, and the like. The inorganic porous support member is assumed to include an inlet portion through which gas flows in, and an outlet portion through which gas flows out. For example, the gas inlet portion is an opening provided in the inorganic porous support member, and the gas outlet portion is an external surface of the inorganic porous support member. The external surface has a large number of pores, and therefore, allows gas to flow out through the entire external surface. The inorganic porous support member may, for example, have a cylindrical structure, pipe-like structure, spiral structure, or the like in which a gas flow path is provided. The inorganic porous support member may be formed by preparing a solid plate object or bulk object formed from an inorganic porous material and then hollowing out a portion of the object to form the gas flow path. The inorganic porous support member preferably has a pore diameter of about 0.01-100 µm. If the pore diameter of the inorganic porous support member is relatively large (e.g., 50 µm or more), an intermediate layer is preferably provided on a surface of the inorganic porous support member. If the mixture solution is directly applied to a surface of the inorganic porous support member having a relatively large pore diameter, the mixture solution may excessively permeate the pore without remaining on the surface, and therefore, it is difficult to form a film or layer. Therefore, if an intermediate layer is provided on the surface of the inorganic porous support member, the entrance of the pore is narrowed by the intermediate layer, and therefore, it is easier to apply the mixture solution. Examples of a material for the intermediate layer include α-alumina, γ-alumina, silica, silicalite, and the like.

Examples of a technique of applying the mixture solution to the inorganic porous support member include dipping, spraying, spinning, and the like. Of them, dipping is preferable because the mixture solution can be uniformly and easily applied to the surface of the inorganic porous support member. A specific procedure of dipping will be described.

Initially, the inorganic porous support member is immersed in the mixture solution obtained in the third mixing step. The immersion time is preferably 5 sec to 10 min in order to allow the mixture solution to sufficiently permeate the pore of the inorganic porous support member. If the immersion time is shorter than 5 sec, a sufficient thickness is not obtained. If the immersion time exceeds 10 min, an excessively large thickness is obtained. Next, the inorganic porous support member is pulled out of the mixture solution. A speed at which the inorganic porous support member is pulled out (referred to as a "pulling speed") is preferably 0.1-2 mm/sec. If the pulling speed is slower than 0.1 mm/sec, an excessively large thickness is obtained. If the pulling speed is faster than 2 mm/sec, a sufficient thickness is not obtained. Next, the inorganic porous support member pulled out is dried. The drying is preferably performed under conditions that 15-40°C and 0.5-3 h. If the drying time is less than 0.5 h, the inorganic porous support member is not sufficiently dried. If the drying time exceeds 3 h, the dried state remains almost unchanged after three hours of the drying. After the end of the drying, the inorganic porous support member with fine polysiloxane particles adhering to the surface (including inner surfaces of pores) is obtained. Note that by performing the above series of steps, i.e., the immersion, pulling-out, and drying steps, on the inorganic porous support member a plurality of times, the amount of fine polysiloxane particles adhering to the inorganic porous support member can be increased. Also, by repeatedly performing the series of steps, the mixture solution can be uniformly applied to the inorganic porous support member, and therefore, the performance of the acidic gas-containing gas treatment separation membrane eventually obtained can be improved.

### (f) Formation Step

A formation step includes performing a thermal treatment on the inorganic porous support member after the application step to form a metal salt-doped, hydrocarbon group-introduced polysiloxane network structure on the surface of the inorganic porous support member. The thermal treatment is performed, for example, using a heating means, such as a baking device or the like. A specific procedure for the thermal treatment will be described.

Initially, the temperature of the inorganic porous support member is increased until it reaches a baking temperature described below. The temperature increasing time is preferably 1-24 h. If the temperature increasing time is shorter than 1 h, it is difficult to obtain a uniform membrane due to the sharp change in temperature. If the temperature increasing time is longer than 24 h, the membrane is likely to deteriorate due to the long-time heating. After the end of the temperature increase, baking is performed for a predetermined period of time. The baking temperature is preferably 30-300°C, more preferably 50-200°C. If the baking temperature is lower than 30°C, the baking is not sufficient, so that a dense membrane is not obtained. If the baking temperature is higher than 300°C, the membrane is likely to deteriorate due to the high-temperature heating. The baking time is preferably 0.5-6 h. If the baking time is shorter than 0.5 h, the baking is not sufficient, so that a dense membrane is not obtained. If the baking time is longer than 6 h, the membrane is likely to deteriorate due to the long-time heating. After the end of the baking, the inorganic porous support member is cooled to room temperature. The cooling time is preferably 5-10 h. If the cooling time is shorter than 5 h, the membrane is likely to be broken or come off due to the sharp change in temperature. If the cooling time is longer than 10 h, the membrane is likely to deteriorate. The inorganic porous support member after the end of the cooling has a separation membrane formed on the surface (including inner surfaces of pores) thereof. Note that, after the "formation step," the process may return to the above "application step." If the application step and the formation step are repeated one or more times, a denser separation membrane having more uniform membrane quality can be formed on the surface of the inorganic porous support member.

By performing the above steps (a)-(f), the acidic gas-containing gas treatment separation membrane of the present invention is produced. The separation membrane has a gas attraction layer which has a site (methyl group) attracting a specific gas (carbon dioxide in this embodiment) on the surface and pores of the inorganic porous support member as a base. The gas attraction layer may be formed on the surface of the inorganic porous support member with an intermediate layer being interposed therebetween. When biogas containing carbon dioxide and methane gas is applied to the separation membrane, carbon dioxide is selectively attracted by the gas attraction layer, so that carbon dioxide directly passes through the pore. Therefore, the methane gas component of the biogas is concentrated, and therefore, a gas having a high methane concentration can be efficiently obtained. The concentrated methane gas can be used as a material for town gas, and a source for hydrogen used for a fuel cell. Note that if the gas attraction layer of the separation membrane has a site attracting methane gas (a hydrocarbon group having carbon atoms the number of which is larger than or equal to that of an ethyl group), then when biogas containing carbon dioxide and methane gas is applied, methane gas is selectively attracted by the gas attraction layer, and then directly passed through the pores. Therefore, in this case, methane gas passing through the separation membrane can be collected, and then used as a material for town gas, and a source for hydrogen used for a fuel cell.

In the method for producing the acidic gas-containing gas treatment separation membrane of the above embodiment, the first preparation solution is mixed in an early production stage, and the second preparation solution is mixed in a late production stage. Alternatively, the first and second preparation solutions may be simultaneously mixed in an early production stage. Specifically, the acidic gas-containing gas treatment separation membrane of the present invention may be produced by the following steps.

### (a) Preparation Step

A first preparation solution which is a mixture of an acid catalyst, water, and an organic solvent, and a second preparation solution which is a mixture of an acid catalyst, an organic solvent, and a metal salt having affinity for acidic gas, are formulated.

### (b) First Mixing Step

The first and second preparation solutions are mixed together.

### (c) Second Mixing Step

The mixture solution (solution containing the metal salt) obtained in the first mixing step is mixed with a tetraalkoxysilane.

### (d) Third Mixing Step

The mixture solution (mixture solution containing a siloxane oligomer) obtained in the second mixing step is mixed with a hydrocarbon group-containing trialkoxysilane.

### (e) Application Step

The mixture solution (colloid or suspension of fine polysiloxane particles) obtained in the third mixing step is applied to an inorganic porous support member.

### (f) Formation Step

A thermal treatment is performed on the inorganic porous support member after the application step to form a metal salt-doped, hydrocarbon group-introduced polysiloxane network structure on a surface of the inorganic porous support member.

Even with such a procedure, a sol-gel reaction of an alkoxysilane can be caused to proceed without being accompanied by rapid hydrolysis or a significant change in pH of the alkoxysilane solution. Therefore, a uniform and dense separation membrane having good carbon dioxide or methane gas separation performance can be formed.

Moreover, in the present invention, the separation membrane can be produced using a single preparation solution. For example, the acidic gas-containing gas treatment separation membrane of the present invention may be produced by the following steps.

### (a) Preparation Step

A preparation solution which is a mixture of an acid catalyst, water, and an organic solvent, is formulated.

### (b) First Mixing Step

The preparation solution obtained in the preparation step is mixed with a tetraalkoxysilane.

### (c) Second Mixing Step

The mixture solution (mixture solution containing a siloxane oligomer) obtained in the first mixing step is mixed with a hydrocarbon group-containing trialkoxysilane.

### (d) Third Mixing Step

The mixture solution (colloid or suspension of fine polysiloxane particles) obtained in the second mixing step is mixed with a metal salt having affinity for acidic gas.

### (e) Application Step

The mixture solution (metal salt-containing colloid or suspension) obtained in the third mixing step is applied to an inorganic porous support member.

### (f) Formation Step

A thermal treatment is performed on the inorganic porous support member after the application step to form a metal salt-doped, hydrocarbon group-introduced polysiloxane network structure on a surface of the inorganic porous support member.

Even with such a procedure, a uniform and dense separation membrane having good carbon dioxide or methane gas separation performance can be formed, provided that the procedure is not accompanied by rapid hydrolysis or a significant change in pH of the alkoxysilane solution. For example, the composition of the preparation solution is formulated so that the pH of the mixture solution (mixture solution containing a siloxane oligomer) obtained in the first mixing step falls within the range of 0.8-2.5.

### Examples

Examples of the acidic gas-containing gas treatment separation membrane of the present invention will now be described. As the separation membrane, a carbon dioxide separation membrane was produced according to the "Method for Producing Acidic Gas-containing Gas Treatment Separation Membrane" described in the above embodiment. In all examples and comparative examples, tetraethoxysilane (Shin-Etsu Silicone LS-2430, manufactured by Shin-Etsu Chemical Co., Ltd.) was used as a tetraalkoxysilane, methyltriethoxysilane (Shin-Etsu Silicone LS-1890, manufactured by Shin-Etsu Chemical Co., Ltd.) was used as a hydrocarbon group-containing trialkoxysilane, nitric acid (manufactured by Wako Pure Chemical Industries, Ltd., super special grade reagent 69.5%) was used as an acid catalyst, and ethanol (manufactured by Wako Pure Chemical Industries, Ltd., super special grade reagent 99.5%) was used as an organic solvent. The amounts of materials used in Examples 1-6 and Comparative Example 1 are shown in Table 1.

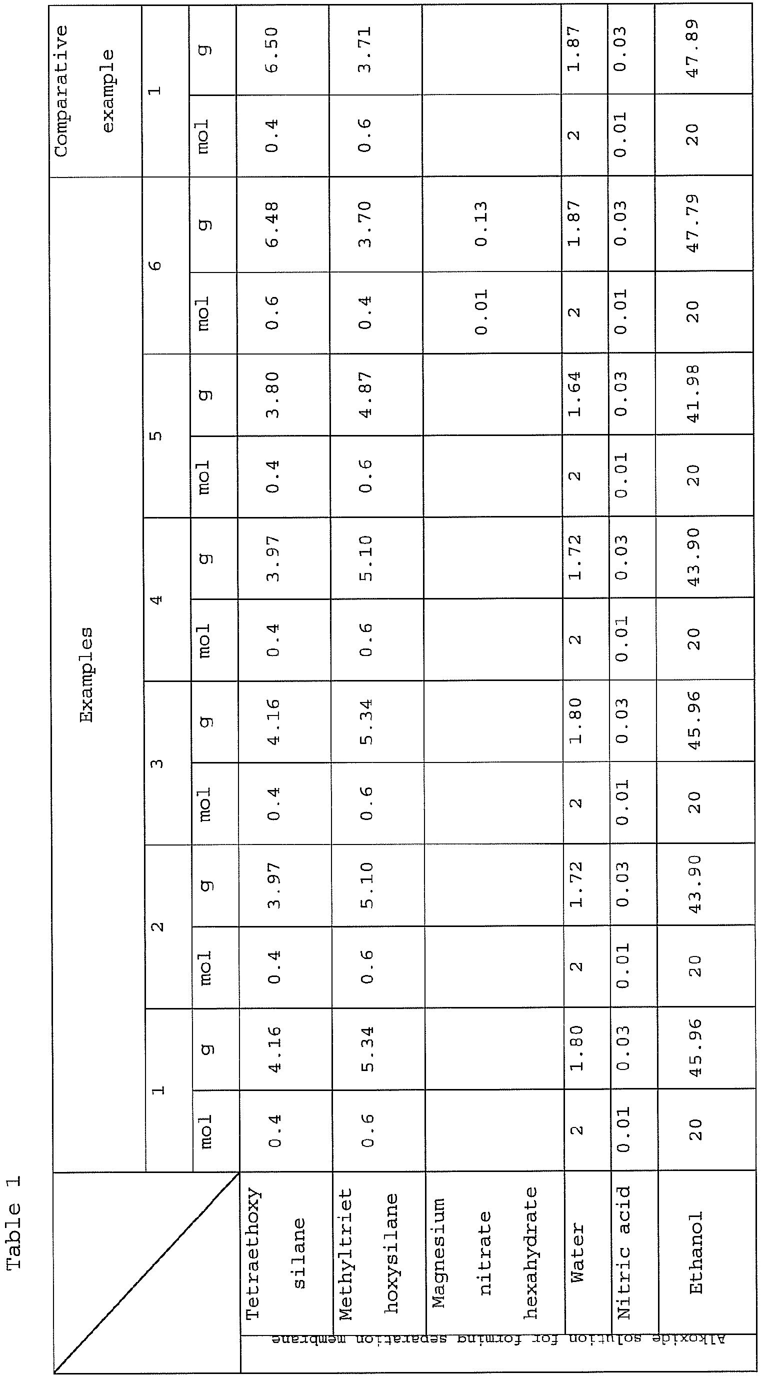

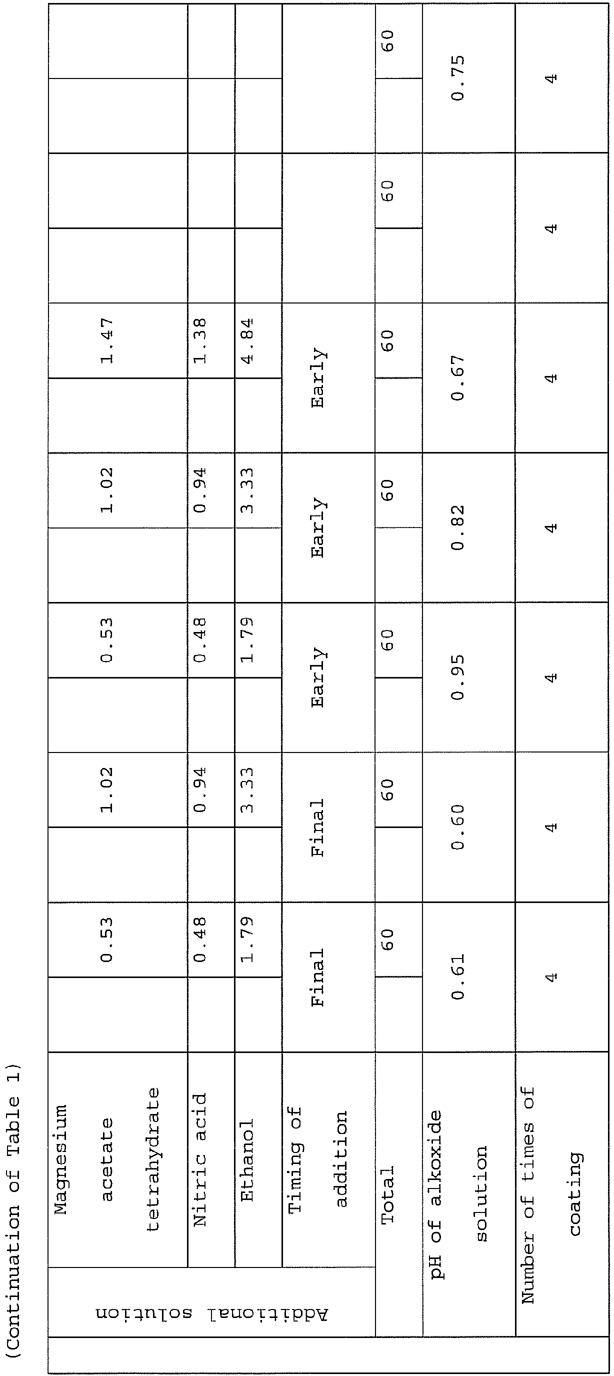

### <Example 1>

In Example 1, magnesium acetate tetrahydrate (manufactured by Sigma-Aldrich Corporation) was used as a metal salt having affinity for carbon dioxide.

### [Alkoxysilane]

· tetraethoxysilane 4.16 g
· methyltriethoxysilane 5.34 g

### [First Preparation Solution]

· water 1.80 g
· nitric acid 0.03 g
· ethanol 45.96 g

* The first preparation solution was formulated by mixing nitric acid, water, and ethanol together, followed by stirring for about 30 min (the same applies to Examples 2-5 below).

### [Second Preparation Solution]

· magnesium acetate tetrahydrate 0.53 g
· nitric acid 0.48 g
· ethanol 1.79 g

* The second preparation solution was formulated by mixing nitric acid and ethanol together, followed by stirring for about 1 h, and then adding magnesium acetate tetrahydrate, followed by stirring for about 1 h (the same applies to Examples 2-5 below). The second preparation solution was used in addition to the first preparation solution, and is shown as an "additional solution" in Table 1.

The separation membrane of Example 1 was produced as follows. Tetraethoxysilane was added to the first preparation solution, followed by stirring for 1 h. Next, methyltriethoxysilane was added to the mixture, followed by stirring for 2.5 h. Next, the second preparation solution (additional solution) was added to the mixture, followed by stirring for 2 h. As a result, an alkoxide solution (mixture solution) for forming the separation membrane was formulated. The separation membrane-forming alkoxide solution had a pH of 0.61. Next, a pipe-like object of an alumina-based ceramic was prepared as an inorganic porous support member. The separation membrane-forming alkoxide solution was applied to a surface of the pipe-like object by dipping. In the dipping step, the pulling speed was 1 mm/s, and after being pulled out, the pipe-like object was dried at room temperature for 1 h. The application and drying of the separation membrane-forming alkoxide solution were performed two times, followed by a thermal treatment in a baking device. The thermal treatment was performed under the following conditions: the temperature was increased from room temperature (25°C) to 150°C in 5 h; the temperature was maintained at 150°C for 2 h; and the temperature was decreased to 25°C in 5 h. The thermal treatment was performed four times. As a result, the production of the separation membrane of Example 1 was completed.

### <Example 2>

In Example 2, magnesium acetate tetrahydrate (manufactured by Sigma-Aldrich Corporation) was used as a metal salt having affinity for carbon dioxide. A separation membrane-forming alkoxide solution was formulated, applied, and thermally treated under conditions similar to those of Example 1, which therefore will not be described in detail. The separation membrane-forming alkoxide solution had a pH of 0.60.

### [Alkoxysilane]

· tetraethoxysilane 3.97 g
· methyltriethoxysilane 5.10 g

### [First Preparation Solution]

· water 1.72 g
· nitric acid 0.03 g
· ethanol 43.90 g

### [Second Preparation Solution]

· magnesium acetate tetrahydrate 1.02 g
· nitric acid 0.94 g
· ethanol 3.33 g

### <Example 3>

In Example 3, magnesium acetate tetrahydrate (manufactured by Sigma-Aldrich Corporation) was used as a metal salt having affinity for carbon dioxide.

### [Alkoxysilane]

· tetraethoxysilane 4.16 g
· methyltriethoxysilane 5.34 g

### [First Preparation Solution]

· water 1.80 g
· nitric acid 0.03 g
· ethanol 45.96 g

### [Second Preparation Solution]

· magnesium acetate tetrahydrate 0.53 g
· nitric acid 0.48 g
· ethanol 1.79 g

A separation membrane of Example 3 was produced as follows. Initially, the first preparation solution and the second preparation solution (additional solution) were mixed together, followed by stirring for 30 min. Next, tetraethoxysilane was added to the mixture, followed by stirring for 1 h. Next, methyltriethoxysilane was added to the mixture, followed by stirring for 1 h. As a result, a separation membrane-forming alkoxide solution (mixture solution) was formulated. The separation membrane-forming alkoxide solution had a pH of 0.95. Next, a pipe-like object of an alumina-based ceramic was prepared as an inorganic porous support member. The separation membrane-forming alkoxide solution was applied to a surface of the pipe-like object by dipping. In the dipping step, the pulling speed was 1 mm/s, and after being pulled out, the pipe-like object was dried at room temperature for 1 h. The application and drying of the separation membrane-forming alkoxide solution were performed two times, followed by a thermal treatment in a baking device. The thermal treatment was performed under the following conditions: the temperature was increased from room temperature (25°C) to 150°C in 5 h; the temperature was maintained at 150°C for 2 h; and the temperature was decreased to 25°C in 5 h. The thermal treatment was performed four times. As a result, the production of the separation membrane of Example 3 was completed.

### <Example 4>

In Example 4, magnesium acetate tetrahydrate (manufactured by Sigma-Aldrich Corporation) was used as a metal salt having affinity for carbon dioxide. A separation membrane-forming alkoxide solution was formulated, applied, and thermally treated under conditions similar to those of Example 3, which therefore will not be described in detail. The separation membrane-forming alkoxide solution had a pH of 0.82.

### [Alkoxysilane]

· tetraethoxysilane 3.97 g
· methyltriethoxysilane 5.10 g

### [First Preparation Solution]

· water 1.72 g
· nitric acid 0.03 g
· ethanol 43.90 g

### [Second Preparation Solution]

· magnesium acetate tetrahydrate 1.02 g
· nitric acid 0.94 g
· ethanol 3.33 g

### <Example 5>

In Example 5, magnesium acetate tetrahydrate (manufactured by Sigma-Aldrich Corporation) was used as a metal salt having affinity for carbon dioxide. A separation membrane-forming alkoxide solution was formulated, applied, and thermally treated under conditions similar to those of Example 3, which therefore will not be described in detail. The separation membrane-forming alkoxide solution had a pH of 0.67.

### [Alkoxysilane]

· tetraethoxysilane 3.80 g
· methyltriethoxysilane 4.87 g

### [First Preparation Solution]

· water 1.64 g
· nitric acid 0.03 g
· ethanol 41.98 g

### [Second Preparation Solution]

· magnesium acetate tetrahydrate 1.47 g
· nitric acid 1.38 g
· ethanol 4.84 g

### <Example 6>

In Example 6, magnesium nitrate hexahydrate (manufactured by Sigma-Aldrich Corporation) was used as a metal salt having affinity for carbon dioxide.

### [Alkoxysilane]

· tetraethoxysilane 6.48 g
· methyltriethoxysilane 3.70 g

### [Metal Salt]

- magnesium nitrate hexahydrate 0.13 g

### [Preparation Solution]

· water 1.87 g
· nitric acid 0.03 g
· ethanol 47.79 g

* The preparation solution was formulated by mixing nitric acid, water, and ethanol together, followed by stirring for about 30 min.

A separation membrane of Example 6 was produced as follows. Tetraethoxysilane was added to the preparation solution, followed by stirring for 1 h. Next, methyltriethoxysilane was added to the mixture, followed by stirring for 2.5 h. Moreover, magnesium nitrate hexahydrate was added to the mixture, followed by stirring for 2 h. As a result, a separation membrane-forming alkoxide solution (mixture solution) was formulated. Next, a pipe-like object of an alumina-based ceramic was prepared as an inorganic porous support member. The separation membrane-forming alkoxide solution was applied to a surface of the pipe-like object by dipping. In the dipping step, the pulling speed was 1 mm/s, and after being pulled out, the pipe-like object was dried at room temperature for 1 h. The application and drying of the separation membrane-forming alkoxide solution were performed two times, followed by a thermal treatment in a baking device. The thermal treatment was performed under the following conditions: the temperature was increased from room temperature (25°C) to 150°C in 5 h; the temperature was maintained at 150°C for 2 h; and the temperature was decreased to 25°C in 5 h. The thermal treatment was performed four times. As a result, the production of the separation membrane of Example 6 was completed.

### <Comparative Example 1>

As Comparative Example 1, a separation membrane was produced without mixing a metal salt having affinity for acidic gas, i.e., a separation membrane undoped with a metal salt was produced. Note that tetraethoxysilane (Shin-Etsu Silicone LS-2430, manufactured by Shin-Etsu Chemical Co., Ltd.) was used as a tetraalkoxysilane, methyltriethoxysilane (Shin-Etsu Silicone LS-1890, manufactured by Shin-Etsu Chemical Co., Ltd.) was used as a hydrocarbon group-containing trialkoxysilane, nitric acid (manufactured by Wako Pure Chemical Industries, Ltd., super special grade reagent 69.5%) was used as an acid catalyst, and ethanol (manufactured by Wako Pure Chemical Industries, Ltd., super special grade reagent 99.5%) was used as an organic solvent. These materials were the same as those used in the above examples.

### [Alkoxysilane]

· tetraethoxysilane 6.50 g
· methyltriethoxysilane 3.71 g

### [Preparation Solution]

· water 1.87 g
· nitric acid 0.03 g
· ethanol 47.89 g

* The preparation solution was formulated by mixing nitric acid, water, and ethanol together, followed by stirring for about 30 min.

A separation membrane of Comparative Example 1 was produced as follows. Tetraethoxysilane was added to the preparation solution, followed by stirring for 1 h. Next, methyltriethoxysilane was added to the mixture, followed by stirring for 2.5 h. As a result, a separation membrane-forming alkoxide solution (mixture solution) was formulated. The separation membrane-forming alkoxide solution had a pH of 0.75. Next, a pipe-like object of an alumina-based ceramic was prepared as an inorganic porous support member. The separation membrane-forming alkoxide solution was applied to a surface of the pipe-like object by dipping. In the dipping step, the pulling speed was 1 mm/s, and after being pulled out, the pipe-like object was dried at room temperature for 1 h. The application and drying of the separation membrane-forming alkoxide solution were performed two times, followed by a thermal treatment in a baking device. The thermal treatment was performed under the following conditions: the temperature was increased from room temperature (25°C) to 150°C in 5 h; the temperature was maintained at 150°C for 2 h; and the temperature was decreased to 25°C in 5 h. The thermal treatment was performed four times. As a result, the production of the separation membrane of Comparative Example 1 was completed.

### <Separation Performance Verification Test>

A test for verifying the carbon dioxide and methane gas separation performance of the separation membranes of Examples 1-6 and Comparative Example 1 was conducted. In the verification test, the carbon dioxide and methane gas separation performance was evaluated with reference to nitrogen. Here, nitrogen has a gas molecular size of 3.64 Å, carbon dioxide has a gas molecular size of 3.3 Å, and methane gas has a gas molecular size of 3.8 Å. Therefore, in a carbon dioxide/nitrogen mixture system, carbon dioxide, which has a smaller gas molecular size than that of nitrogen, more easily passes through a separation membrane. In a methane gas/nitrogen mixture system, methane gas, which has a larger gas molecular size than that of nitrogen, has more difficulty in passing through a separation membrane. If a characteristic (functional group) of a membrane is suitably set by utilizing such different properties of these gases, carbon dioxide or methane gas can be separated from the mixture system. In the verification test, the gas permeabilities (permeation rates) of the separation membranes of Example 1-6 and Comparative Example 1 were measured with respect to nitrogen, methane gas, and carbon dioxide, and a permeation rate ratio α (CO₂/N₂) was calculated using the permeation rates. The test was performed as follows. Moisture was completely removed from the pores of a separation membrane by vacuum drying for 1 h. The separation membrane was placed in a closed space, into which individual gases containing nitrogen, methane gas, and carbon dioxide, respectively, were caused to flow under a pressure of 0.1 MPa, and the permeability [mol/(m² × s (second) × Pa)] of each individual gas was measured. The result of the separation performance verification test is shown in Table 2.

**Table 2**

| | | Examples | | | | | | Comparative example |
|---|---|---|---|---|---|---|---|---|
| | | 1 | 2 | 3 | 4 | 5 | 6 | 1 |
| Permeation rate [mol/(m² × s (second) × Pa)] | P(N₂) | 3.76×10⁻¹¹ | 3.65×10⁻¹¹ | 3.76×10⁻¹¹ | 1.22×10⁻¹¹ | 4.86×10⁻¹¹ | 4.94×10⁻¹⁰ | 7.48×10⁻¹¹ |
| | P(CH₄) | 8.59×10⁻¹¹ | 1.02×10⁻¹⁰ | 7.63×10⁻¹¹ | 1.85×10⁻¹¹ | 2.77×10⁻¹¹ | 6.01×10⁻¹⁰ | 2.19×10⁻¹⁰ |
| | P(CO₂) | 4.71×10⁻⁹ | 4.41×10⁻⁹ | 4.45×10⁻⁹ | 5.76×10⁻¹⁰ | 2.30×10⁻⁹ | 6.24×10⁻⁸ | 6.11×10⁻⁹ |
| Permeation rate ratio | α(CO₂/N₂) | 125.23 | 120.87 | 118.40 | 47.36 | 47.36 | 126.40 | 27.96 |
| | α(CO₂/CH₄) | | | | | | 103.81 | 81.70 |

As shown in Table 2, the metal salt-doped separation membranes of Examples 1-6 had a higher permeability with respect to carbon dioxide than nitrogen. In particular, the separation membranes of Examples 1-3 and 6 had about 4.2-4.5 times as high carbon dioxide separation performance as that of the separation membrane undoped with a metal salt of Comparative Example 1.

Also, for the acidic gas-containing gas treatment separation membrane of the present invention, separation of carbon dioxide from a gas mixture containing carbon dioxide and methane gas which mimics biogas was studied. It was found that the separation membrane of Example 6 doped with magnesium nitrate hexahydrate as a metal salt particularly has good carbon dioxide separation performance. Specifically, while the separation membrane of Comparative Example 1 had a permeability ratio α (CO₂/CH₄) of 81.70 of carbon dioxide from a mixture of carbon dioxide and methane gas, the separation membrane of Example 6 had a permeability ratio α (CO₂/CH₄) of 103.81 of carbon dioxide from a mixture of carbon dioxide and methane gas, i.e., higher carbon dioxide separation performance. Note that it will be understood that the permeability ratio α (CO₂/CH₄) of 103.81 of Example 6 is significantly high, compared to the permeability ratio α (CO₂/CH₄) of 3.3-20 of Patent Document 1 described above as a background-art technique.

Thus, it was demonstrated that the acidic gas-containing gas treatment separation membrane of the present invention has good carbon dioxide or methane gas separation performance, and therefore, is considerably useful as a separation membrane for obtaining a gas having a high methane concentration from biogas generated by biologically treating garbage or the like.

### INDUSTRIAL APPLICABILITY

The acidic gas-containing gas treatment separation membrane and the method for producing the same, the method for separating acidic gas or methane gas, and the method for producing acidic gas or methane gas, of the present invention, are usable in equipment for producing town gas, equipment for supplying hydrogen to a fuel cell, and the like. Moreover, the present invention is applicable to gas emitted from a factory or power station, natural gas, gas which is a byproduct of oil refinery, and the like.

## Claims

1. A separation membrane for treating gas containing acidic gas, **characterized in that** it comprises:
a polysiloxane network structure having an introduced hydrocarbon group, doped with a metal salt having affinity for the acidic gas.

2. The separation membrane of claim 1, **characterized in that**
the polysiloxane network structure having the introduced hydrocarbon group is a composite polysiloxane network structure obtained by a reaction of a tetraalkoxysilane with a trialkoxysilane containing the hydrocarbon group.

3. The separation membrane of claim 2, **characterized in that**
the tetraalkoxysilane is tetramethoxysilane or tetraethoxysilane (indicated by "A"), and
the trialkoxysilane containing the hydrocarbon group is a trimethoxysilane or triethoxysilane whose Si atom is bonded with an alkyl or phenyl group having 1-6 carbon atoms (indicated by "B").

4. The separation membrane of claim 3, **characterized in that**
the mixing ratio (A/B) of the A to the B, expressed in a mole ratio, is 1/9-9/1.

5. The separation membrane of any one of claims 1-4, **characterized in that**
the metal salt is an acetate, nitrate, carbonate, borate, or phosphate of at least one metal selected from the group consisting of Li, Na, K, Mg, Ca, Ni, Fe, and Al.

6. A method for producing a separation membrane for treating a gas containing acidic gas, **characterized in that** the method comprises:
(a) a preparation step of formulating a first preparation solution which is a mixture of an acid catalyst, water, and an organic solvent, and a second preparation solution which is a mixture of an acid catalyst, an organic solvent, and a metal salt having affinity for the acidic gas;
(b) a first mixing step of mixing the first preparation solution with a tetraalkoxysilane;
(c) a second mixing step of mixing a mixture solution obtained in the first mixing step with a trialkoxysilane containing a hydrocarbon group;
(d) a third mixing step of mixing a mixture solution obtained in the second mixing step with the second preparation solution;
(e) an application step of applying a mixture solution obtained in the third mixing step to an inorganic porous support member; and
(f) a formation step of performing a thermal treatment on the inorganic porous support member after the application step, to form a polysiloxane network structure having the introduced hydrocarbon group, doped with the metal salt, on a surface of the inorganic porous support member.

7. A method for producing a separation membrane for treating a gas containing acidic gas, **characterized in that** the method comprises:
(a) a preparation step of formulating a first preparation solution which is a mixture of an acid catalyst, water, and an organic solvent, and a second preparation solution which is a mixture of an acid catalyst, an organic solvent, and a metal salt having affinity for the acidic gas;
(b) a first mixing step of mixing the first preparation solution with the second preparation solution;
(c) a second mixing step of mixing a mixture solution obtained in the first mixing step with a tetraalkoxysilane;
(d) a third mixing step of mixing a mixture solution obtained in the second mixing step with a trialkoxysilane containing a hydrocarbon group;
(e) an application step of applying a mixture solution obtained in the third mixing step to an inorganic porous support member; and
(f) a formation step of performing a thermal treatment on the inorganic porous support member after the application step, to form a polysiloxane network structure having the introduced hydrocarbon group, doped with the metal salt, on a surface of the inorganic porous support member.

8. A method for producing a separation membrane for treating a gas containing acidic gas, **characterized in that** the method comprises:
(a) a preparation step of formulating a preparation solution which is a mixture of an acid catalyst, water, and an organic solvent;
(b) a first mixing step of mixing the preparation solution obtained in the preparation step with a tetraalkoxysilane;
(c) a second mixing step of mixing a mixture solution obtained in the first mixing step with a trialkoxysilane containing a hydrocarbon group;
(d) a third mixing step of mixing a mixture solution obtained in the second mixing step with a metal salt having affinity for the acidic gas;
(e) an application step of applying a mixture solution obtained in the third mixing step to an inorganic porous support member; and
(f) a formation step of performing a thermal treatment on the inorganic porous support member after the application step, to form a polysiloxane network structure having the introduced hydrocarbon group, doped with the metal salt, on a surface of the inorganic porous support member.

9. The method of any one of claims 6-8, **characterized in that**
the tetraalkoxysilane is tetramethoxysilane or tetraethoxysilane (indicated by "A"), and
the hydrocarbon group-containing trialkoxysilane is a trimethoxysilane or triethoxysilane whose Si atom is bonded with an alkyl or phenyl group having 1-6 carbon atoms (indicated by "B").

10. The method of claim 9, **characterized in that**
the mixing ratio (A/B) of the A to the B, expressed in a mole ratio, is 1/9-9/1.

11. The method of any one of claims 6-10, **characterized in that**
the metal salt is an acetate, nitrate, carbonate, borate, or phosphate of at least one metal selected from the group consisting of Li, Na, K, Mg, Ca, Ni, Fe, and Al.

12. A method for separating acidic gas or methane gas, **characterized in that** the method comprises:
applying biogas containing the acidic gas and the methane gas to the separation membrane of any one of claims 1-5.

13. A method for producing acidic gas or methane gas, **characterized in that** the method comprises:
applying biogas containing the acidic gas and the methane gas to the separation membrane of any one of claims 1-5, to extract the acidic gas or the methane gas.
